(19)

**Europäisches Patentamt**
**European Patent Office**
**Office européen des brevets**

(11) **EP 2 922 196 B1**

(12) **EUROPEAN PATENT SPECIFICATION**

(45) Date of publication and mention
of the grant of the patent:
**06.04.2022  Bulletin 2022/14**

(21) Application number: **15159348.0**

(22) Date of filing: **17.03.2015**

(51) International Patent Classification (IPC):
***H02P 29/032*** *(2016.01)*

(52) Cooperative Patent Classification (CPC):
**H02P 29/032**

(54) **ELECTRONIC CONTROL EQUIPMENT OF A PERMANENT MAGNET MOTOR**

ELEKTRONISCHE KONTROLLAUSRÜSTUNG EINES DAUERMAGNET-MOTORS

Equipement de controle électronique d'un moteur à aimants permanents

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.03.2014  IT MI20140431**

(43) Date of publication of application:
**23.09.2015  Bulletin 2015/39**

(73) Proprietor: **EMC FIME S.R.L.**
**60022 Castelfidardo, Ancona (IT)**

(72) Inventors:
 • **Tomeo, Giordan**
  **60044 Fabriano, Ancona (IT)**
 • **Mencaglia, Mauro**
  **60044 Fabriano, Ancona (IT)**
 • **Grippo, Fortunato**
  **60044 Fabriano, Ancona (IT)**
 • **Viconi, Fabrizio**
  **60044 Fabriano, Ancona (IT)**
 • **Macera, Emidio**
  **60044 Fabriano, Ancona (IT)**

(74) Representative: **Mozzi, Matteo et al**
**Jacobacci & Partners S.p.A.**
**Via Senato, 8**
**20121 Milano (IT)**

(56) References cited:
**US-A1- 2001 009 360     US-B1- 6 452 349**

 • **ERTAN H B ET AL: "A pulse frequency modulated
drive for a wide speed range application",
POWER ELECTRONIC DRIVES AND ENERGY
SYSTEMS FOR INDUSTRIAL GROWTH, 1998 .
PROCEEDINGS. 1998 INTERNATIONAL
CONFERENCE ON PERTH, WESTERN
AUSTRALIA 1-3 DEC. 1998, PISCATAWAY, NJ,
USA,IEEE, vol. 2, 1 December 1998 (1998-12-01),
pages 546-551, XP010720755, ISBN:
978-0-7803-4879-0**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical field

The present invention relates to an electronic control equipment of an electric motor, in particular, a single-phase permanent-magnet (brushless) motor.

Background art

As it is known, an electric permanent-magnet motor or brushless motor, for example, in direct current (DC), comprises a rotor, composed of a permanent magnet, and a stator provided with conductive windings supplied by alternating current voltages AC. In such motors, the rotor acts as an inductor member and rotates, while the induced member, i.e., the stator, is supplied by the alternating current voltages generated by an inverter device starting from the direct current supplying voltage.

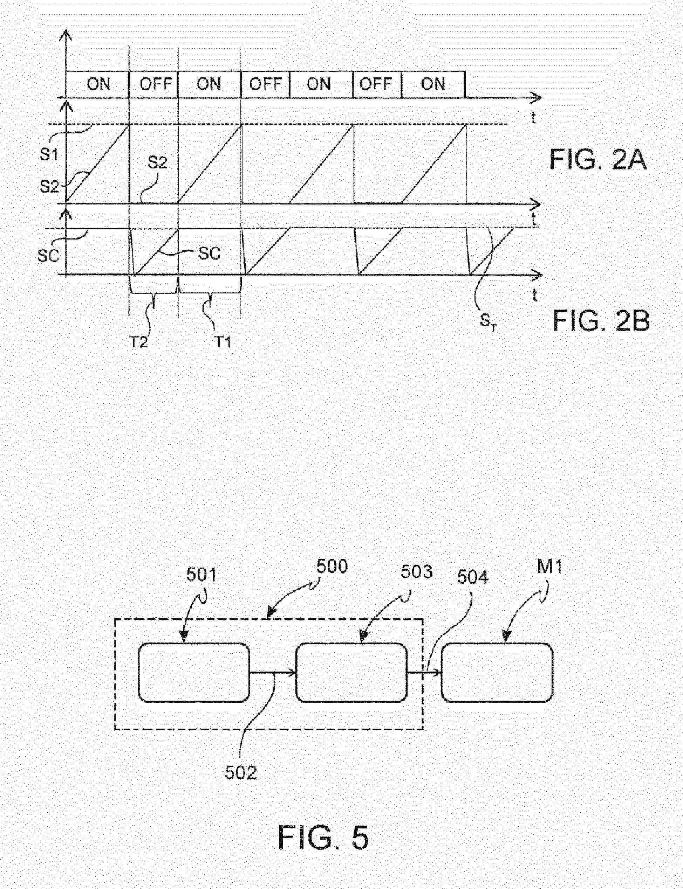

An example of an inverter device or drive 500 of a known type for the control of a permanent-magnet electric motor M1 is shown by way of example in Fig. 5 by a block diagram. Such inverter 500 comprises, an adjustment block 501 adapted to generate pulse-width modulated signals PWM 502, to drive the turning on/off of power transistors comprised in a power drive block 503. In particular, such signals PWM 502 are signals having a fixed frequency and a variable duty cycle.

The power drive block 503 generally comprises a bridge circuit structure, for example, a single-phase structure, including electronic power transistors, for example, IGBT transistors, of a type known to those skilled in the art and configured to supply an alternating current voltage 504 to the motor M1.

Generally, the adjustment block 501 includes a programmable digital device, for example, a microprocessor, adapted to generate a suitable sequence of signals PWM 502 for driving the transistors of the power drive stage 503 which ensures the desired speed (or torque) to the permanent-magnet.motor M1.

In an brushless single-phase electric motor M1, e.g., a motor configured to move a fan heater of a gas boiler, the current flowing in the coils, i.e., the phase current, is strictly related to the torque required by the load: the more such torque required by the load is, the more the power input is. In general, the phase current in the coil reaches a peak value after a rising time interval depending on the impedance of the coil itself and the speed reached by the rotor: for low speeds of the rotor, the phase current may quickly reach such peak value without an appropriate control. This may lead to several drawbacks, among which mechanical stresses on the electric motor, also referred to as torque peaks from those skilled in the art, or undesired effects of demagnetization of the permanent magnet.

In order to obviate the above-mentioned drawbacks and prevent the phase current in the coils from reaching undesired peak values, it is known to limit the maximum phase current by increasing the impedance of the coil itself. However, such measure reduces the performance of the brushless single-phase motor M1.

Furthermore, with the known inverters or drive devices, it is not possible to efficiently control the current in the coils of the brushless motor M1 as the rotation speed of the rotor varies, i.e., both for high and low rotation speeds of the rotor. This causes undesired effects of noise and vibration of the motor.

The document US 6 452 349 B1 discloses an analogue circuit in an electronically commuted motor, said circuit including two current limiting members so that a driving current and a braking current are both monitored. US 2001/009360 discloses another current limit circuit of an inverter.

SUMMARY OF THE INVENTION

It is an object of the present invention to devise and provide an electronic control equipment of an electric motor, in particular a single-phase permanent-magnet (brushless) motor, having features that allow at least partially overcoming the above-indicated limitations of the known drive devices.

Such an object is achieved by an electronic control equipment of an electric permanent-magnet motor in accordance with claim 1. Alternative embodiments of the above-mentioned equipment are defined in the dependent claims.

BRIEF DESCRIPTION OF THE DRAWINGS

Further characteristics and advantages of the above-mentioned electronic control equipment will be apparent from the description set forth below of a preferred embodiment, given by way of illustrative, non-limiting example, with reference to the appended figures, in which:

-   **Fig.** 1 shows a block diagram of an electronic control equipment of an electric motor in accordance with the invention;

- **Figs. 2A-2B** show, as a function of time, trends of electric signals managed by the electronic control equipment of Fig. 1;
- **Fig. 3** shows a circuit scheme of a comparator block and a modulation block comprised in the electronic control equipment Fig. 1 and a microprocessor external to the equipment;
- **Fig. 4** shows, as a function of time, trends of further electric signals managed by the electronic control equipment of Fig. 1;
- **Fig. 5** shows a block diagram of a known inverter which is used in the industrial field to control the movement of an electric motor.

DETAILED DESCRIPTION

In the above-mentioned figures, similar or analogous elements are indicated by the same reference numerals.

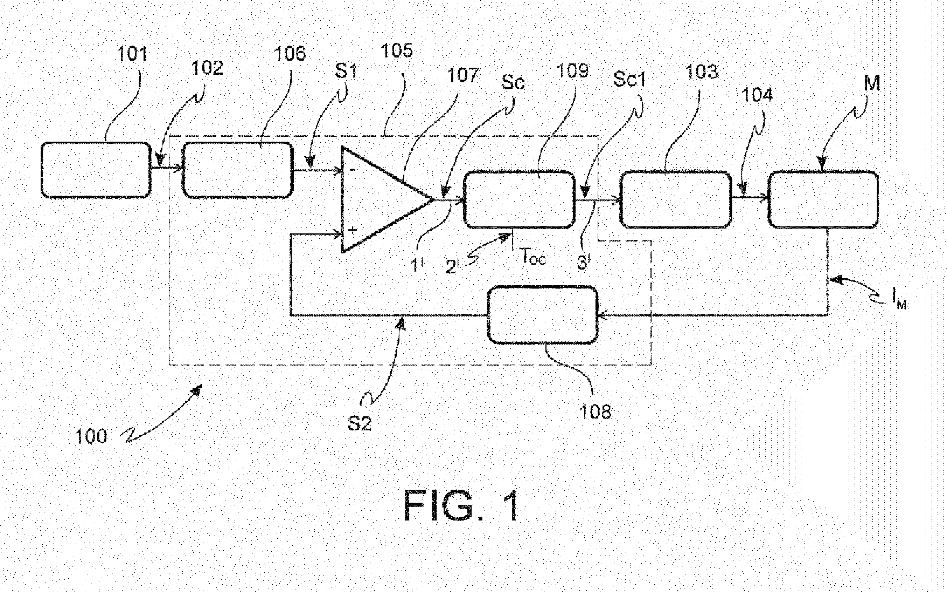

With reference to Fig. 1, a block diagram of an electronic equipment used in the industrial field for supplying power to control the movement of an electric motor M in accordance with the invention on the whole is indicated with 100.

It shall be noted that such electric motor M is preferably a single-phase electric motor of the permanent-magnet or brushless motor type, which can be used, for example, to move a fan heater of a gas boiler and the like. In general, such brushless motor comprises a rotor, composed of a permanent magnet, and a stator provided with conductive windings supplied by alternating current voltages AC.

For the sake of brevity, herein below, the electronic control equipment 100 will be referred to as control equipment or simply equipment.

In particular, the control equipment 100 comprises a stage for generating reference voltages 101 configured to generate a pulse-width modulated digital voltage signal PWM generally indicated by the reference 102. Such signal PWM 102 is preferably a fixed frequency signal, for example, 1kHz, and with a duty cycle which is variable.

The control equipment 100 further comprises a power stage including a power drive block 103. Such power drive block 103 comprises a bridge circuit structure (not shown), in particular, a single-phase structure, including electronic power transistors, for example, IGBT transistors (Insulated Gate Bipolar Transistors), of a type known to those skilled in the art. Such IGBT power transistors are controllable, based on the PWM signals 102 generated by the voltage generator block, to supply an alternating-current voltage AC 104 to the electric motor M to ensure the desired speed (or torque) to the motor M, i.e., to move it.

Furthermore, the control equipment 100 advantageously comprises a control and adjustment stage generally indicated with the reference number 105 and enclosed by a dotted line. In particular, such control and adjustment stage 105 is interposed between the stage for generating reference voltages 101 and the power stage 103 to receive the above-mentioned pulse-width modulated digital signal PWM 102.

Such control and adjustment stage 105 comprises a filtering block 106, for example a low-pass filter RC, adapted to receive at a respective input the digital voltage signal PWM 102 to generate in output an analogic voltage signal or first voltage signal S1 with a fixed frequency indicative of a reference current Iref. Such first voltage signal S1 is a signal having an amplitude substantially constant upon time, and it is suitable to take an amplitude value ranging, e.g., between 0 and 5 V.

Such first voltage signal S1 is provided on a first input terminal, in particular, on an inverting input (-), of a comparator block or comparator 107.

The control and adjustment stage 105 further comprises a current sensor block 108 configured to detect a current of the electric motor $I_M$ to generate a second voltage signal S2 to be sent on a second input terminal, in particular, a non-inverting input (+) of the comparator 107.

In an embodiment, such current sensor block 108 comprises a resistor, and the above-mentioned second voltage signal S2 is proportional to the current $I_M$ flowing in the coil of the electric motor M.

In accordance with an embodiment, the above-mentioned first voltage signal S1 is a signal with a constant amplitude over time and it is representative of the reference current Iref to be flown in the coil of the motor M. The second voltage signal S2 is, for example, a saw tooth signal.

Advantageously, the comparator block 107 is adapted to generate a control voltage signal SC to enable/disable the electric power transfer to the electric motor M by the power stage 103 based on the comparison of the first voltage signal S1 with the second voltage signal S2.

In particular, such control signal SC is configured to enable the electric power transfer to the electric motor M in a first operative condition, in which an amplitude of the first voltage signal S1 is greater than an amplitude of the second voltage signal S2, and to disable such electric power transfer to the motor M in a second operative condition, in which the amplitude of the second voltage signal S2 is equal or greater than the amplitude of the first voltage signal S1.

In an embodiment, referring to Fig. 2B, such control signal SC is a periodic signal having a first amplitude substantially constant in a first time interval T1 to enable the electric power transfer to the electric motor M, and a second amplitude variable substantially linearly in a second time interval T2 to disable the electric power transfer to the motor M.

In a particular embodiment, the control signal SC has such second amplitude increasing substantially linearly in the second time interval T2. In particular, referring to Fig. 2B, this occurs if a time duration associated with a falling edge of the above-mentioned control signal SC at a switching between the first operative condition and the second operative condition is taken as negligible.

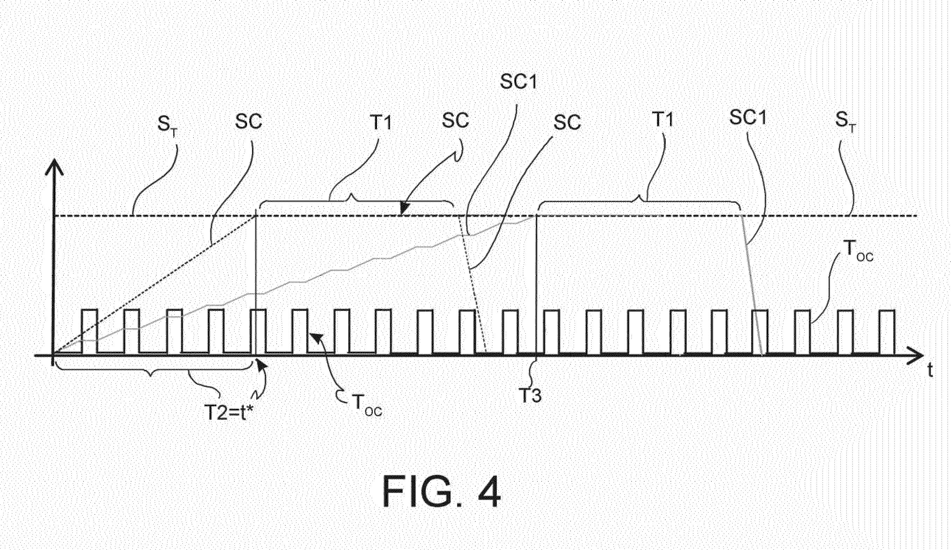

With reference to the Figs. 2B and 4, in the electronic equipment 100, the first amplitude of the control signal SC during the first time interval T1 has an amplitude equal to that of a respective constant threshold signal $S_T$. In particular, such threshold signal $S_T$ is defined by a suitable circuitry inside the comparator block 107, i.e., it is preset in such block.

Furthermore, it shall be noted that the control equipment 100 of the motor M is included in a complex control system which includes, among the other circuits, also a microprocessor 200 configured to manage such electronic equipment 100. In particular, the control equipment is adapted to generate the. alternating current voltages supplying the stator of the motor M.

The control and adjustment stage 105 of the electronic equipment 100 comprises an electronic modulation block 109 of the control signal SC interposed between the comparator block 107 and the power stage 103.

Such modulation block 109 is configured to receive the control signal SC at a first input 1' and a modulation activating digital signal $T_{OC}$ at a second input 2' to generate a modulated control signal SC1 at a respective output 3'.

Such modulation digital signal $T_{OC}$ is adapted, to take a high logic level (1 logic) to activate the modulation block 109 and a low logic level (0 logic) to deactivate it.

Such modulation digital signal $T_{OC}$ comprises a plurality of rectangular voltage pulses, as shown in Fig. 4. It shall be noted that such modulation digital signal $T_{OC}$ has a duty cycle indicated with the reference d. Such duty cycle, d of the modulation digital signal $T_{OC}$ may be varied between 0 and 1.

In particular, referring to Fig. 4 showing an enlargement of the period T1+T2 of the control signal SC of Fig. 2B, such modulated control signal SC1 has a respective first amplitude substantially constant in the first time interval T1 to enable the electric power transfer to the electric motor M. Furthermore, an average value of a respective second amplitude of the modulated control signal SC1 is variable substantially linearly in a third time interval T3 that is greater than the above-mentioned second time interval T2 to disable the electric power transfer to the motor M.

In an embodiment of the invention, the average value of such second amplitude of the modulated control signal SC1 is increasing substantially linearly in the third time interval T3.

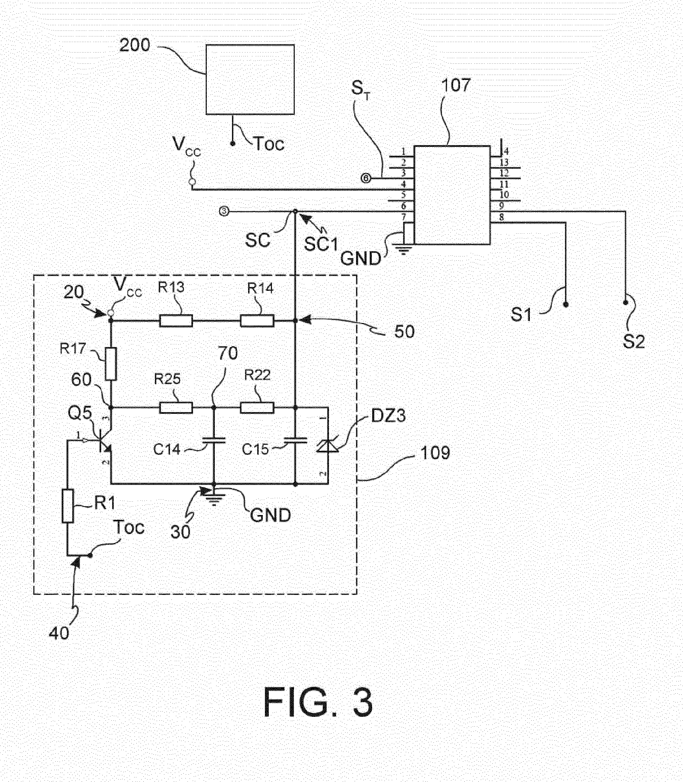

Referring to Fig. 3, the electronic modulation block 109 of the control signal SC comprises an electric network R13, R14, R17, R25, R22, C14, C15, DZ3, Q5, R1 activated at the high logic level (1 logic) of the modulation digital signal $T_{OC}$.

The electronic modulation block 109 of the control signal SC is implemented only in a portion R13, R14, C15 of such electric network R13, R14, R17, R25, R22, C14, C15, DZ3, Q5, R1 at the low logic level (0 logic) of the modulation digital signal $T_{OC}$

The comparator block 107 of the electronic control equipment 100 comprises an integrated electronic device having a plurality of input/output terminals connected to respective input/output pins 1-14.

In particular, a first 8 and a second 9 pins are adapted to receive the first voltage signal S1 and the second voltage signal S2, respectively. A third pin 6 is adapted to provide the above-mentioned control signal SC or the modulated control signal SC1. A fourth 4 and a fifth 7 pins are connected to a power-supply potential Vcc and a ground potential GND, respectively. A sixth pin 3 is electrically connected to the third pin 6 to define the threshold voltage signal $S_T$ to be compared with the control signal SC or the modulated control signal SC1 to transfer power to the motor M.

For example,. the power-supply potential Vcc is of about 15V.

Referring to Fig. 3, in more detail, the electronic modulation block 109 of the control signal SCcomprises a first 20 and a second 30 supply terminals connected to the power-supply potential Vcc and the ground potential GND, respectively. Furthermore, the electronic modulation block 109 comprises an input terminal 40 to receive the modulation digital signal $T_{OC}$ and an output terminal 50 connected to the third pin 6 of the comparator block 107.

It shall be noted that the microprocessor 200 is also configured to provide the modulation digital signal $T_{OC}$ to be provided on the input terminal 40 of the electronic modulation block 109.

The electric network of the modulation block 109 comprises a first R13 and a second R14 resistors connected between the first supply terminal 20 and the output terminal 50 of the network. A third resistor R17 is connected between the first supply terminal 20 and a first node 60 of the network. A fourth resistor R25 is connected between the above-mentioned first node 60 and a second node 70. A fifth resistor R22 is connected between the second node 70 and the output terminal 50 of the network.

A transistor Q5, in a configuration with a common emitter, comprises the collector terminal connected to the first node 60 of the network and an emitter terminal connected to the ground potential GND. The base terminal of such transistor Q5 is controlled by the modulation digital signal $T_{OC}$ through a respective resistor R1.

Such transistor Q5 is configured to act as a switch. In particular, the transistor Q5 is active (hence, in a short circuit) at the high logic level (1 logic) of the modulation digital signal $T_{OC}$. Vice versa, the transistor Q5 is deactivated (hence, with an open circuit) at the low logic level (0 logic) of the modulation digital signal $T_{OC}$.

The electric network 109 further comprises a first capacitor C14 connected between the second node 70 and the ground potential GND, and a second capacitor C15 connected between the output terminal 50 of the network and the ground potential GND. A protection Zener diode DZ3 is connected with inverted polarity to the above-mentioned second capacitor C15 to limit the voltage on such capacitor.

It shall be noted that, in the case that the electronic equipment 100 does not provide for any modulations on the control signal SC, i.e., the input terminal 40 of the network 109 is always at a low logic value, the amplitude of the control signal SC is set by the sub-network comprising the first resistor R13, the second resistor R14, and the second capacitor C15.

In case of a modulation on the control signal SC, at the low logic level (0 logic) of the modulation digital signal $T_{OC}$, the electric network 109, comprising only the first resistor R13, the second resistor R14 and the second capacitor C15, is configured to set over time the trend of the value of the amplitude of the modulated control signal SC1 present on the third pin 6 of the comparator block 107.

In more detail, with reference again to the Figs. 2B, 3, and 4, with the equipment 100 of the invention the current in the motor M is adjusted based on the signal PWM 102. Referring to Fig. 2B, the control signal SC, generated starting from the first S1 and second S2 voltage signals, where the first signal S1 is generated starting from the signal PWM 102, has a frequency that may be expressed by the equation:

$$f_{SC} = \frac{1}{T2 + T1} \tag{1}$$

The first time interval T1 depends only by the operative conditions of the motor M. For example, the higher the value of the amplitude of the first voltage signal S1 is, the higher the duration of such first time interval will be (see Figs. 2A, 2B).

The second time interval T2, excluding the effect of the modulation introduced with the modulation block 109, depends on the charge of the second capacitor C15 of Fig. 3. In particular, the voltage across such second capacitor C15 represents the above-mentioned control signal SC. Such control signal SC goes to zero at a change in the power status of the equipment 100 between the first and the second operative conditions, i.e., between a status ON (active) and a status OFF (deactivated) (see Fig. 2A).

In particular, during the status OFF, the control voltage signal SC increases upon a loading of the second capacitor C15 starting from the power-supply potential Vcc through an equivalent resistance $R_{eq}$, which can be expressed as:

$$R_{eq} = \left(R_{13} + R_{14}\right) /\!/ \left(R_{17} + R_{25} + R_{22}\right) \tag{2}$$

When the control signal SC, during the rising, is equal to the threshold signal $S_T$, the change in the power status between the status OFF (non-active) to the status ON (active) occurs.

Although the control signal SC has actually a trend over time of the exponential type, such exponential trend can be approximated to a linear trend, which can be expressed as:

$$SC(t) = V_{CC} \cdot \left(1 - e^{-t/\tau}\right) \approx V_{CC} \cdot \frac{t}{\tau} \tag{3}$$

wherein Vcc is the power-supply potential, for example, 15 V, and

$$\tau = R_{eq} \cdot C15 \tag{4}$$

It shall be noted that the equation (3) is valid for time instants t in the power status OFF (non-active) and the transition between the status ON and the status OFF is substantially instantaneous, i.e., the transition time is equal to zero, as stated above. In particular, t=0 is assumed at the transition between the status ON and the status OFF and it is assumed that, at such instant, SC(t) of the equation (3) is equal to zero.

In such a case, where t* is the transition instant between the status OFF to the status ON, when the control signal SC is equal to the threshold signal $S_T$, such instant can be expressed as:

$$t^* = \frac{S_T}{V_{CC}} \tau$$

and assuming that Vcc=15 V and $S_T$ =2.5 V,

$$t^* \approx 0{,}167 \cdot \tau = T2 \tag{5}$$

In the case where the modulation circuit block 109 and the modulation digital signal $T_{OC}$ are activated, the equipment 100 of the invention allows adjusting the duration of the status OFF, in particular making such deactivated status to last more than the second time interval T2.

In particular, with reference to Figs. 3 and 4, when the modulation signal $T_{OC}$ takes a low logic value (0 logic), the trend of the control signal SC can be expressed as in the equation (3).

When the modulation signal $T_{OC}$ takes a high logic value (1 logic), the control signal SC decreases in response to the discharge of the second capacitor C15 through a discharge resistance $R_{DIS}$, which can be expressed as:

$$R_{DIS} = R25 + R22 \tag{6}$$

In such a manner, by using a modulation digital signal $T_{OC}$ having a frequency that is at least one order of magnitude greater than the frequency of the control signal SC of the equation (1), i.e., a frequency at least ten times greater than $f_{SC}$, and assuming that the discharge resistance $R_{DIS}$ of the equation (6) is much greater than the equivalent resistance $R_{eq}$ of the equation (2), it is possible to obtain that the above-mentioned third time interval T3 can be expressed as:

$$T3 = \frac{t^*}{1-d} = \frac{T2}{1-d} \tag{7}$$

where d is the duty cycle of the modulation signal $T_{OC}$ variable between 0 and 1. In other terms, such third time interval T3, besides being greater than the second time interval T2, is inversely proportional to the complement to 1 of the duty cycle d of the modulation digital signal $T_{OC}$ i.e., it is inversely proportional to the time fraction during which the modulation digital signal $T_{OC}$ is low (0 logic).

In another embodiment of the present invention, the function carried out by the modulation block 109 may be implemented by a software executed by the microprocessor 200 itself.

The electronic control equipment 100 of a permanent-magnet motor M of the invention has a number of advantages.

First, the proposed equipment 100 allows an efficient control of the current of the motor M, by virtue of the inclusion of a current limiter, which avoids the undesired effects of the current peaks. This ensures a reduction of the noise and the vibrations of the motor in addition to a direct control of the motor itself to which the phase current is imposed.

Furthermore, unlike the known inverter or drive devices, with the equipment 100 it is possible to efficiently control the current, in the coils of the brushless motor M as the rotation speed of the rotor varies, i.e., both for high and low rotation speeds of the rotor.

In particular, the extension of the second time interval T2 up to the value of the third time interval T3, i.e., the extension of the period of status OFF (deactivated) of the motor, allows driving the motor M itself to lower speeds than those currently achievable.

For example, the current permanent-magnet motors are characterized by a rotation speeds, (round per minute, or rpm) ranging between 700 rpm and 7000 rpm. In other terms, the control drives of a known type may modulate the rotation speed of the motor by a factor 10, i.e., they control the minimum speed of the motor up to speed values of 1/10 of the maximum speed.

With the electronic equipment 100 of the invention, once the maximum speed has been set, by adjusting the duty cycle d of the modulation digital signal $T_{OC}$, it is possible to efficiently control the motor also for speeds lower than 700 rpm, for example to speeds of 300-400 rpm.

In such a case, in the absence of a modulation, the second time interval T2 may take, for example, values of about 30-40 μs, while in the presence of a modulation, the third time interval T3 may take a value of about 100 μs to reduce the minimum rotation speed controllable at about 350 rpm.

In other terms, it is possible with the present invention to extend the range of speed control values applicable to the permanent-magnet motor.

## Claims

1. An electronic equipment (100) for the control of the movement of a single-phase permanent-magnet electric motor (M), comprising:

   - a stage (101) for generating reference voltages adapted to generate a pulse-width modulated digital signal PWM (102) ;
   - a power stage (103) adapted to transfer electric power to the electric motor (M) to move it;
   - a control and adjustment stage (105) interposed between said stage for generating reference voltages (101) and said power stage (103) to receive said pulse-width modulated digital signal PWM (102), the control and adjustment stage (105) comprising a comparator block (107) adapted to generate a control signal (SC) to enable/disable the electric power transfer to the electric motor (M) by the power stage (103) based on the comparison of a first voltage signal (S1) and a second voltage signal (S2), said first voltage signal (S1) being representative of a reference current (Iref) and generated based on the pulse-width modulated digital signal PWM (102), said second voltage signal (S2) being representative of a current ($I_M$) flowing in a coil of the electric motor (M),

   wherein said control signal (SC) is a periodic signal having a first amplitude which is a constant value in a first time interval (T1) to enable the electric power transfer to the electric motor (M), and a second amplitude which is variable linearly in a second time interval (T2) to disable the electric power transfer to the motor (M), and wherein said control and adjustment stage (105) further comprises an electronic modulation block (109) of the control signal (SC) interposed between the comparator block (107) and the power stage (103), said modulation block (109) being adapted to receive the control signal (SC) at a first input (1') and a modulation digital signal ($T_{OC}$) at a second input (2') to generate a modulated control signal (SC1) at an output (3'), said modulated control signal (SC1) having a further first amplitude which is a constant value in said first time interval (T1) to enable the electric power transfer to the electric motor (M), and having a further second amplitude the average value of which is variable linearly in a third time interval (T3) that is greater than said second time interval (T2) to disable the electric power transfer to the motor (M), **characterized in that** said electronic modulation block (109) includes an electric network comprising:

   - first (20) and second (30) supply terminals connected to a power-supply potential (Vcc) and to a ground potential (GND), respectively;
   - an input terminal (40) to receive the modulation digital signal ($T_{OC}$) and an output terminal (50) connected to a pin (6) of the comparator block (107) ;
   - a first (R13) and a second (R14) resistor connected between the first supply terminal (20) and the output terminal (50) of the network;
   - a third resistor (R17) connected between the first supply terminal (20) and a first node (60) of the network;
   - a fourth resistor (R25) connected between said first node (60) and a second node (70) of the network;
   - a fifth resistor (R22) connected between the second node (70) and the output terminal (50);
   - a NPN bipolar transistor (Q5), having a collector terminal connected to the first node (60) of the network and an emitter terminal connected to the second supply terminal (30), a base terminal of the transistor (Q5) being connected to the input terminal (40) through a further resistor (R1), to be controlled by the modulation digital signal ($T_{OC}$)
   - a first capacitor (C14) connected between the second node (70) and the second (30) supply terminal, and a second capacitor (C15) connected between the output terminal (50) and the second (30) supply terminal;
   - a protection Zener diode (DZ3) connected between the output terminal (50) and the second (30) supply terminal with inverted polarity to said second capacitor (C15) to limit the voltage on such second capacitor.

2. The electronic control equipment (100) according to claim 1, wherein the second amplitude of said control signal (SC) increases linearly in said second time interval (T2).

3. The electronic control equipment (100) according to claim 1, wherein the average value of the further second amplitude of said modulated control signal (SC1) increases linearly in said third time interval (T3).

4. The electronic control equipment (100) according to claim 1, wherein said modulation digital signal ($T_{OC}$) is adapted to assume a high logic level (1 logic) to activate said modulation block (109) and a low logic level (0 logic) to deactivate it.

5. The electronic control equipment (100) according to claim 1, wherein said modulation digital signal ($T_{OC}$) comprises a plurality of rectangular voltage pulses with a variable duty cycle (d).

6. The electronic control equipment (100) according to claim 1, wherein said comparator block (107) comprises an integrated electronic device having a plurality of input/output terminals connected to respective input/output pins (1-14), wherein a first (8) and a second (9) pins are adapted to receive the first voltage signal (S1) and the second voltage signal (S2), respectively, a third pin (6) is adapted to provide said control signal (SC) and said modulated control signal (SC1), a fourth (4) and a fifth (7) pins are connected to the power-supply potential (Vcc) and to the ground potential (GND), respectively, a fifth pin (3) is electrically connected to the third pin (6) to define a threshold voltage signal ($S_T$) to be compared to the control signal (SC) or to the modulated control signal (SC1) in order to transfer power to the motor M.

7. The electronic control equipment (100) according to claim 5, wherein said third time interval (T3) is inversely proportional to the complement to 1 of the duty cycle (d) of said modulation digital signal ($T_{OC}$).

8. The electronic control equipment (100) according to claim 1, wherein said control and adjustment stage (105) comprises a current sensor block (108) configured to detect said current ($I_M$) flowing in the coil of the electric motor (M) to generate said second voltage signal (S2) .

9. The electronic control equipment (100) according to claim 8, wherein said current sensor block (108) comprises a resistor and said second voltage signal (S2) is proportional to said current ($I_M$) flowing in the coil of the electric motor (M).

10. The electronic control equipment (100) according to claim 1, wherein said control and adjustment stage (105) comprises a filtering block (106) adapted to receive in input said pulse-width modulated digital signal PWM (102) to generate in output said first voltage signal (S1).

11. The electronic control equipment (100) according to claim 10, wherein said filtering block (106) comprises a low-pass R-C filter.

12. A single-phase permanent-magnet electric motor (M), comprising:

- a rotor, composed of a permanent magnet, acting as a rotating member of the motor;
- a stator provided with conductive windings supplied by alternating current voltages,
- an electronic control system comprising:

   a microprocessor (200), and
   an electronic control equipment (100) in accordance with any of the claims 1-11, which is adapted to generate said alternating-current voltages to supply the stator.

**Patentansprüche**

1. Elektronische Einrichtung (100) für die Steuerung der Bewegung eines Einphasen-Permanentmagnet-Elektromotors (M), umfassend:

- eine Stufe (101) zum Generieren von Referenzspannungen, welche dazu eingerichtet ist, ein pulsweitenmoduliertes digitales Signal PWM (102) zu generieren;
- eine Leistungsstufe (103), welche dazu eingerichtet ist, elektrische Leistung auf den Elektromotor (M) zu übertragen, um ihn zu bewegen;
- eine Steuer- und Einstellstufe (105), welche zwischen der Stufe zum Generieren von Referenzspannungen (101) und der Leistungsstufe (103) eingefügt ist, um das pulsweitenmodulierte digitale Signal PWM (102) zu empfangen, wobei die Steuer- und Einstellstufe (105) einen Vergleicherblock (107) umfasst, welcher dazu eingerichtet ist, ein Steuersignal (SC) zu generieren, um die Übertragung elektrischer Leistung auf den Elektromotor (M) durch die Leistungsstufe (103) auf Grundlage des Vergleichs eines ersten Spannungssignals (S1) und eines zweiten Spannungssignals (S2) zu ermöglichen / zu sperren, wobei das erste Spannungssignal (S1) für einen Referenzstrom (Iref) repräsentativ ist und auf Grundlage des pulsweitenmodulierten digitalen Signals PWM (102) generiert ist, wobei das zweite Signal (S2) für einen Strom ($I_M$) repräsentativ ist, welcher in einer Spule des Elektromotors (M) fließt,

wobei das Steuersignal (SC) ein periodisches Signal ist, welches eine erste Amplitude, welche in einem ersten Zeitintervall (T1) ein konstanter Wert ist, um die Übertragung elektrischer Leistung auf den Elektromotor (M) zu ermöglichen, und eine zweite Amplitude aufweist, welche in einem zweiten Zeitintervall (T2) linear variierbar ist, um die Übertragung elektrischer Leistung auf den Motor (M) zu sperren, und wobei die Steuer- und Einstellstufe (105) ferner einen elektronischen Modulationsblock (109) des Steuersignals (SC) umfasst, welcher zwischen dem Vergleicherblock (107) und der Leistungsstufe (103) eingefügt ist, wobei der Modulationsblock (109) dazu eingerichtet ist, an einem ersten Eingang (1') das Steuersignal (SC) und an einem zweiten Eingang (2') ein digitales Modulationssignal ($T_{OC}$) zu empfangen, um an einem Ausgang (3') ein moduliertes Steuersignal (SC1) zu generieren, wobei das modulierte Steuersignal (SC1) eine weitere erste Amplitude aufweist, welche in dem ersten Zeitintervall (T1) ein konstanter Wert ist, um die Übertragung elektrischer Leistung auf den Elektromotor (M) zu ermöglichen, und eine weitere zweite Amplitude aufweist, deren Mittelwert in einem dritten Zeitintervall (T3), welches größer ist als das zweite Zeitintervall (T2), variabel linear ist, um die Übertragung elektrischer Leistung auf den Motor (M) zu sperren,
**dadurch gekennzeichnet, dass**
der elektronische Modulationsblock (109) ein elektronisches Netzwerk umfasst, umfassend:

- einen ersten (20) und einen zweiten (30) Versorgungsanschluss, welche mit einem Stromversorgungspotential (Vcc) bzw. einem Erdungspotential (GND) verbunden sind;
- einen Eingangsanschluss (40), um das digitale Modulationssignal (TOC) zu empfangen, und einen Ausgangsanschluss (50), welcher mit einem Stift (6) des Vergleicherblocks (107) verbunden ist;
- einen ersten (R13) und einen zweiten (R14) Widerstand, welche zwischen den ersten Versorgungsanschluss (20) und den Ausgangsanschluss (50) des Netzwerks geschaltet sind;
- einen dritten Widerstand (R17), welcher zwischen den ersten Versorgungsanschluss (20) und einen ersten Knoten (60) des Netzwerks geschaltet ist;
- einen vierten Widerstand (R25), welcher zwischen den ersten Knoten (60) und einen zweiten Knoten (70) des Netzwerks geschaltet ist;
- einen fünften Widerstand (R22), welcher zwischen den zweiten Knoten (70) und den Ausgangsanschluss (50) geschaltet ist;
- einen bipolaren npn-Transistor (Q5), welcher einen Kollektoranschluss, welcher mit dem ersten Knoten (60) des Netzwerks verbunden ist, und einen Emitteranschluss aufweist, welcher mit dem zweiten Versorgungsanschluss (30) verbunden ist, wobei ein Basisanschluss des Transistors (Q5) durch einen weiteren Widerstand (R1) mit dem Eingangsanschluss (40) verbunden ist, um durch das digitale Modulationssignal ($T_{OC}$) gesteuert zu sein;
- einen ersten Kondensator (C14), welcher zwischen den zweiten Knoten (70) und den zweiten (30) Versorgungsanschluss geschaltet ist, und einen zweiten Kondensator (C15), welcher zwischen den Ausgangsanschluss (50) und den zweiten (30) Versorgungsanschluss geschaltet ist;
- eine Schutz-Zenerdiode (DZ3), welche mit zu dem zweiten Kondensator (C15) umgekehrter Polarität zwischen den Ausgangsanschluss (50) und den zweiten (30) Versorgungsanschluss geschaltet ist, um die Spannung an einem derartigen zweiten Kondensator zu begrenzen.

**2.** Elektronische Steuereinrichtung (100) nach Anspruch 1, wobei die zweite Amplitude des Steuersignals (SC) in dem zweiten Zeitintervall (T2) linear ansteigt.

**3.** Elektronische Steuereinrichtung (100) nach Anspruch 1, wobei der Mittelwert der weiteren zweiten Amplitude des modulierten Steuersignals (SC1) in dem dritten Zeitintervall (T3) linear ansteigt.

4. Elektronische Steuereinrichtung (100) nach Anspruch 1, wobei das digitale Modulationssignal ($T_{OC}$) dazu eingerichtet ist, einen hohen Logikpegel (1 Logik) anzunehmen, um den Modulationsblock (109) zu aktivieren, und einen niedrigen Logikpegel (0 Logik) anzunehmen, um ihn zu deaktivieren.

5. Elektronische Steuereinrichtung (100) nach Anspruch 1, wobei das digitale Modulationssignal ($T_{OC}$) eine Mehrzahl rechteckiger Spannungsimpulse mit einem variablen Tastverhältnis (d) umfasst.

6. Elektronische Steuereinrichtung (100) nach Anspruch 1, wobei der Vergleicherblock (107) eine integrierte elektronische Vorrichtung umfasst, welche eine Mehrzahl von Eingangs-/Ausgangsanschlüssen aufweist, welche mit jeweiligen Eingangs-/Ausgangsstiften (1-14) verbunden sind, wobei ein erster (8) und ein zweiter (9) Stift dazu eingerichtet sind, das erste Spannungssignal (S1) bzw. das zweite Spannungssignal (S2) zu empfangen, ein dritter Stift (6) dazu eingerichtet ist, das Steuersignal (SC) und das modulierte Steuersignal (SC1) bereitzustellen, ein vierter (4) und ein fünfter (7) Stift mit dem Stromversorgungspotential (Vcc) bzw. dem Erdungspotential (GND) verbunden sind, ein fünfter Stift (3) elektrisch mit dem dritten Stift (6) verbunden ist, um ein mit dem Steuersignal (SC) oder mit dem modulierten Steuersignal (SC1) zu vergleichendes Schwellenspannungssignal ($S_T$) zu definieren, um Leistung auf den Motor M zu übertragen.

7. Elektronische Steuereinrichtung (100) nach Anspruch 5, wobei das dritte Zeitintervall (T3) umgekehrt proportional zu dem Komplement von 1 des Tastverhältnisses (d) des digitalen Modulationssignals ($T_{OC}$) ist.

8. Elektronische Steuereinrichtung (100) nach Anspruch 1, wobei die Steuer- und Einstellstufe (105) einen Stromsensorblock (108) umfasst, welcher dazu eingerichtet ist, den Strom ($I_M$) zu detektieren, welcher in der Spule des Elektromotors (M) fließt, um das zweite Spannungssignal (S2) zu generieren.

9. Elektronische Steuereinrichtung (100) nach Anspruch 8, wobei der Stromsensorblock (108) einen Widerstand umfasst und das zweite Spannungssignal (S2) proportional zu dem Strom ($I_M$) ist, welcher in der Spule des Elektromotors (M) fließt.

10. Elektronische Steuereinrichtung (100) nach Anspruch 1, wobei die Steuer- und Einstellstufe (105) einen Filterblock (106) umfasst, welcher dazu eingerichtet ist, im Eingang das pulsweitenmodulierte digitale Signal PWM (102) zu empfangen, um im Ausgang das erste Spannungssignal (S1) zu generieren.

11. Elektronische Steuereinrichtung (100) nach Anspruch 10, wobei der Filterblock (106) einen RC-Tiefpassfilter umfasst.

12. Einphasen-Permanentmagnet-Elektromotor (M), umfassend:

   - einen aus einem Permanentmagneten gebildeten Rotor, welcher als ein rotierendes Element des Motors wirkt;
   - einen mit leitfähigen Wicklungen bereitgestellten Stator, welcher durch Wechselspannungen versorgt wird,
   - ein elektronisches Steuersystem, umfassend

      einen Mikroprozessor (200) und
      eine elektronische Steuereinrichtung (100) gemäß einem der Ansprüche 1-11, welche dazu eingerichtet ist, die Wechselspannungen zu generieren, um den Stator zu versorgen.

**Revendications**

1. Equipement électronique (100) pour le contrôle du mouvement d'un moteur électrique (M) monophasé à aimants permanents, comprenant :

   - un étage (101) pour engendrer des tensions de référence, adapté pour engendrer un signal digital modulé en largeur d'impulsion PWM (102) ;
   - un étage de puissance (103) adapté pour transférer de la puissance électrique au moteur électrique (M) pour le faire mouvoir ;
   - un étage de contrôle et d'ajustage (105) interposé entre ledit étage pour engendrer des tensions de référence (101) et ledit étage de puissance (102) pour recevoir le signal digital modulé en largeur d'impulsion PWM (102) , l'étage de contrôle et d'ajustage (105) comprenant un bloc comparateur (107) adapté pour engendrer un signal de contrôle (SC) pour permettre/bloquer le transfert de puissance électrique au moteur électrique (M) par l'étage de puissance (103), sur la base de la comparaison d'un premier signal de tension (S1) à un deuxième signal de tension (S2), le premier signal de tension (S1) représentant un courant de référence (Iref) et étant engendré sur la base du signal digital modulé en largeur d'impulsion PWM (102), le deuxième signal de tension (S2) représentant un courant ($I_M$) circulant dans une bobine du moteur électrique (M),

le signal de contrôle (SC) étant un signal périodique ayant une première amplitude qui est une valeur constante dans un premier intervalle de temps (T1) pour rendre possible le transfert de puissance électrique au moteur électrique (M), et une deuxième amplitude qui est linéairement variable dans un deuxième intervalle de temps (T2) pour empêcher le transfert de puissance électrique au moteur (M), et ledit étage de contrôle et d'ajustage (105) comprenant en outre un bloc de modulation électronique (109) du signal de contrôle (SC) interposé entre le bloc comparateur (107) et l'étage de puissance (103), ledit bloc de modulation (109) étant adapté pour recevoir le signal de contrôle (SC) à une première entrée (1') et un signal digital de modulation ($T_{oc}$) à une deuxième entrée (2') pour engendrer un signal de contrôle modulé (SC1) à une sortie (3'), le signal de contrôle modulé (SC1) ayant une autre première amplitude qui est une valeur constante dans ledit premier intervalle de temps (T1) pour permettre le transfert de puissance électrique au moteur électrique (M), été ayant une autre deuxième amplitude dont la valeur moyenne est linéairement variable dans un troisième intervalle de temps (T3) qui est supérieur au deuxième intervalle de temps (T2) pour empêcher le transfert de puissance électrique au moteur (M),
**caractérisé en ce que** le bloc de modulation électronique (109) comprend un réseau électrique comportant :

- des premier (20) et deuxième (30) terminaux d'alimentation connectés respectivement à un potentiel d'alimentation (Vcc) et à un potentiel de masse (GND) ;
- un terminal d'entrée (40) pour recevoir le signal digital de modulation ($T_{oc}$) et un terminal de sortie (50) relié à une broche (6) du bloc comparateur (107) ;
- des première (R13) et deuxième (R14) résistances reliées entre le premier terminal d'alimentation (20) et le terminal de sortie (50) du réseau ;
- une troisième résistance (R17) reliée entre le premier terminal d'alimentation (20) et un premier nœud (60) du réseau ;
- une quatrième résistance (R25) reliée entre le premier nœud (60) et un deuxième nœud (70) du réseau ;
- une cinquième résistance (R22) reliée entre le deuxième nœud (70) et le terminal de sortie (50) ;
- un transistor bipolaire NPN (Q5) ayant un terminal collecteur relié au premier nœud (60) du réseau et un terminal émetteur relié au deuxième terminal d'alimentation (30), un terminal base du transistor (Q5) étant relié au terminal d'entrée (40) par le biais d'un autre transistor (R1) pour être contrôlé par le signal digital de modulation ($T_{oc}$) ;
- un premier condensateur (C14) relié entre le deuxième nœud (70) et le deuxième terminal d'alimentation (30) et un deuxième condensateur (C15) relié entre le terminal de sortie (50) et le deuxième terminal d'alimentation (30) ;
- une diode Zener de protection (DZ3) reliée entre le terminal de sortie (50) et le deuxième terminal d'alimentation (30) avec une polarité inversée par rapport au deuxième condensateur (C15) pour limiter la tension sur ce deuxième condensateur.

2. Equipement de contrôle électronique (100) selon la revendication 1, **caractérisé en ce que** la deuxième amplitude du signal de contrôle (SC) augmente linéairement dans le deuxième intervalle de temps (T2).

3. Equipement de contrôle électronique (100) selon la revendication 1, **caractérisé en ce que** la valeur moyenne de l'autre deuxième amplitude du signal de contrôle modulé (SC1) augmente linéairement dans le troisième intervalle de temps (T3).

4. Equipement de contrôle électronique (100) selon la revendication 1, **caractérisé en ce que** le signal digital de modulation ($T_{oc}$) est adapté pour avoir un niveau logique haut (1 logic) pour activer le bloc de modulation (109) et un niveau logique bas (0 logic) pour le désactiver.

5. Equipement de contrôle électronique (100) selon la revendication 1, **caractérisé en ce que** le signal digital de modulation ($T_{oc}$) comprend une pluralité d'impulsions de tension rectangulaires avec une fréquence de cycle variable (d).

6. Equipement de contrôle électronique (100) selon la revendication 1, **caractérisé en ce que** le bloc comparateur (107) comprend un dispositif électronique intégré ayant une pluralité de terminaux d'entrée/sortie reliés aux broches d'entrée/sortie (1 - 14) respectives, une première (8) et une deuxième (9) broches étant adaptées pour recevoir respectivement le premier signal de tension (S1) et le deuxième signal de tension (S2), une troisième broche (6) étant adaptée pour fournir ledit signal de contrôle (SC) et ledit signal de contrôle modulé (SC1), des quatrième (4) et cinquième (7) broches étant reliées respectivement au potentiel d'alimentation (Vcc) et au potentiel de masse (GND), une cinquième broche (3) étant reliée électriquement à la troisième broche (6) pour définir un signal de tension seuil ($S_T$) qui est à comparer au signal de contrôle (SC) ou au signal de contrôle modulé (SC1) afin de transférer de la puissance au moteur (M).

7. Equipement de contrôle électronique (100) selon la revendication 5, **caractérisé en ce que** le troisième intervalle de temps (T3) est inversement proportionnel au complément à 1 de la fréquence de cycle (d) du signal digital de modulation ($T_{oc}$).

8. Equipement de contrôle électronique (100) selon la revendication 1, **caractérisé en ce que** l'étage de contrôle et d'ajustement (105) comprend un bloc capteur de courant (108) configuré pour détecter le courant ($I_M$) passant dans la bobine du moteur électrique (M) pour engendrer ledit deuxième signal de tension (S2).

9. Equipement de contrôle électronique (100) selon la revendication 8, **caractérisé en ce que** le bloc capteur de courant (108) comprend une résistance et le deuxième signal de tension (S2) est proportionnel au courant ($I_M$) passant dans la bobine du moteur électrique (M).

10. Equipement de contrôle électronique (100) selon la revendication 1, **caractérisé en ce que** l'étage de contrôle été d'ajustement (105) comprend un bloc de filtrage (106) adapté pour recevoir à l'entrée le signal digital modulé en largeur d'impulsion PWM (102) pour engendrer en sortie le premier signal de tension (S1).

11. Equipement de contrôle électronique (100) selon la revendication 10, **caractérisé en ce que** le bloc de filtrage (106) comprend un filtre RC passe-bas.

12. Moteur électrique monophasé à aimants permanents (M) comprenant :

> - un rotor composé d'un aimant permanent agissant comme élément rotatif du moteur ;
> - un stator pourvu de spires conductives alimentées par des tensions alternatives ;
> - un système de contrôle électronique comportant :
>
> > un microprocesseur (200) et
> > un équipement de contrôle électronique (100) selon l'une des revendications 1 à 11 qui est adapté pour engendrer lesdites tensions alternatives pour alimenter le stator.

FIG. 1

FIG. 2A

FIG. 2B

FIG. 5

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6452349 B1

- US 2001009360 A